# EUROPEAN PATENT SPECIFICATION

(11) **EP 3 265 728 B1**
(45) Date of publication and mention of the grant of the patent: **05.08.2020**
(21) Application number: 16761142.5
(22) Date of filing: 02.03.2016
(51) Int. Cl.: F24F 13/20, F16K 17/36, F16K 27/12, F24F 13/10

(54) **FRAMEWORK, BLAST DAMPER AND METHOD**
RAHMEN, SPRENGDÄMPFER UND VERFAHREN
CHARPENTE, AMORTISSEUR DE SOUFFLE ET PROCÉDÉ

(30) Priority: 06.03.2015 FI 20155149
(43) Date of publication of application: 10.01.2018
(73) Proprietor: Temet OY, 00880 Helsinki (FI)
(72) Inventor: KARKKULAINEN, Timo, 00880 Helsinki (FI)
(74) Representative: Boco IP Oy Ab
(86) International application number: PCT/FI2016/050130
(87) International publication number: WO 2016/142578

(56) References cited:
- EP-A2- 2 472 192
- EP-A2- 2 472 192
- WO-A1-2009/136006
- CN-U- 201 748 012
- CN-U- 201 748 012
- GB-A- 2 336 190
- GB-A- 2 412 163
- GB-A- 2 462 841

## Description

### FIELD OF THE INVENTION

The present invention relates to a framework for installing and supporting a blast damper, and more particularly to a framework according to the preamble of claim 1. The present invention also relates to a blast damper for protecting a ventilation system, and more particularly to a blast damper according to the preamble of claim 12. The present invention also relates to a method for preparing a framework, and more particularly to a method according to the preamble of claim 16.

### BACKGROUND OF THE INVENTION

In petrochemical plants, oil-drilling rigs, process industry plants and other corresponding plants and buildings, and also civil defence shelters, it is necessary to provide safeguard against sudden and high pressure loads caused by explosions, sudden fires, or the like. In such plants people must be present for controlling the operations in processes and separate control rooms or control buildings are built for that purpose. These spaces need to have air conditioning which operates normally in a normal situation but in an emergency situation they must prevent combustion gases, heat and pressure from entering inside the space where people are present.

Problem associated with the above mentioned situation is that although the building would take the pressure from an explosion usually apertures in the walls of the building in which ventilation systems are arranged as a retrofitting cannot take the pressure which means that the ventilation system breaks down and the wall of the building will also be destroyed.

Ventilation systems are safeguarded against such pressure loads by installing in them blast dampers comprising pressure valves that close automatically when a pressure load of the above-mentioned type is directed to them. Pressure valves of this type may also be installed at a desired location in a ventilation shaft or directly inside or outside a pressure load-resistant wall in connection with a ventilation shaft. Typical the blast dampers may comprise hurricane barriers arranged as a screen on the outer surface of the pressure valve. These screens prevent big solid object from entering inside the pressure valve. The blast damper may also comprise a sand trap for preventing sand or other small objects from entering the pressure valve. When entering the pressure valve sand may damage it and prevent it from working properly.

The pressure valve or the blast damper is installed to the mentioned wall or wall structure an in connection with a ventilation system. The wall structure is provided with a framework to which the pressure valve or pressure valve and possible other components of the blast damper are installed and supported. The framework is usually embedded into the wall, such as concrete wall. The framework is mounted to the wall such that it forms a tight connection with the wall and does not allow any air leaks from the connecting surface between the wall and the frame. The frame is preferably embedded to the wall such that it extends from the inner surface of the wall to the outer surface of the wall.

The framework for installing and supporting a blast damper to a wall of a building comprises a frame forming a periphery of the framework and to which frame components of the blast damper are installed and supported. The frame defines a frame flow channel through the framework. The frame of the framework is conventionally manufactured from frame parts which may be profile parts, such as straight metal profiles. The profile parts are first cut into desired length and then welded together.

However, the welding is time consuming and difficult production step. Welding also has to be carried out in a production facility which means that the framework has to be transported in assembled state to the installation location which requires a lot of space during transportation and makes the handling difficult. Furthermore, welding may cause local deformations to the frame and frame parts of the framework such that tight connection with the wall is difficult to achieve. Welding also limits the possibilities to modify the dimensions of the framework.

EP 2 472 192 discloses a framework according to which the preamble of claim 1 is based.

### BRIEF DESCRIPTION OF THE INVENTION

An object of the present invention to provide a framework, blast damper and method for preparing a framework so as to overcome or at least alleviate the above mentioned prior art disadvantages. The objects of the present invention are achieved with a framework according to the characterizing portion of claim 1. The objects of the present invention are also achieved with a blast damper according to the characterizing portion of claim 12. The objects of the present invention are further achieved with a method according to the characterizing portion of claim 16.

The preferred embodiments of the invention are disclosed in the dependent claims.

The invention is based on the realization that for example people working at petrochemical refineries and other industrial facilities expose themselves to high risks when working there because there is always risks for a massive explosion of gases and flammable liquids that are present at refineries. The refineries and other industrial facilities require a control room that is staffed so that there is always someone monitoring the processes. The control room also comprises a lot of electricity and technique that has to be protected during an explosion in order to continue working or to shut down properly during explosion and people monitoring the process has to be kept alive. Therefore the building comprising the control room has to be blast resistant and comprise ventilation system that works properly during explosion and does not circulate contaminated air inside the building. The interface connections between outdoor and indoor space need to be passive in normal situations which means that they work properly circulating air in the building and into the building but the connections need to be active when an emergency situation happens. So the ventilation system also has to be blast resistant. During explosion different sized solid material with gases are flown in the air and smashing against building in addition to the pressure wave. The ventilation system has to be protected against all sized smashes and pressure waves. Accordingly the blast damper for protecting the ventilation system has to be arranged such that it is firmly attached to the building or wall of the building such that it is not damaged and the air tight installation is maintained under pressure loads during explosion.

For achieving the above mentioned objectives, the blast damper or pressure valve is installed and supported to the wall with a framework. The framework is mounted or embedded to the wall or wall structure. The framework may be for example cast to directly to a concrete wall during constructing the wall or building. Alternatively the framework may be retrofitted to an existing wall. The framework comprises means for attaching and installing the framework to the wall. The framework further comprises connection elements or connection surfaces to which a pressure valve and possible other blast damper components may be attached and mounted.

The framework comprises a frame forming a periphery of the framework and to which frame components of the blast damper are arranged to be installed and supported. The framework further comprises a frame flow channel through the framework and defined by the frame. The frame is provided from and comprises at least two frame parts which are mechanically attached to each other with at least one mechanical joint for providing the frame. The mechanical joint may comprise one or more alignment elements for aligning frame parts relative to each other. Accordingly the aligning elements guide the frame parts to correct position and orientation relative to each other during assembling the framework from the frame parts. The mechanical joint may further comprise one or more securing elements for securing the frame parts together. The frame parts are secured and attached to each other with each other during assembling the framework from the frame parts. The securing elements may comprise tightening member for tightening the securing elements such that the frame parts are locked together. The mechanical joint may also comprises one or more clamping elements for clamping the frame parts against each other. The clamping elements may be provided in connection with the one or more securing elements and arranged to clamp the frame parts against each other upon securing the frame parts together with the one or more securing elements during assembling the framework. The assembled framework may further be hot galvanized for providing a galvanizing layer on the framework. The galvanizing layer bonds frame the parts of the framework together, therefore the galvanizing layer also serves as a bonding material between the frame parts of the framework.

An advantage of the framework, blast damper and method of the present invention is that framework may be easily assembled at the installation site. Therefore, the framework may be transported to the installation site as separate frame parts and thus the handling of the framework during transportation is efficient. The time consuming welding step is also omitted and thus the efficiency of the manufacturing process is increased. Omitting the welding also prevents formation of local deformations. The mechanical joint enables freedom to modify the dimensions of the framework by simply forming the frame parts to desired length. The mechanical joint comprising the clamping elements also provides clamping of the frame parts against each other. Thus the frame parts are pressed against each other and the clamping provides drawing or tension to the frame parts towards and against each other. The tension provides strength and rigidity to the framework such that the framework may have increased strength against pressure loads.

### BRIEF DESCRIPTION OF THE DRAWINGS

In the following the invention will be described in greater detail by means of preferred embodiments with reference to the attached [accompanying] drawings, in which
Figure 1 is a schematic view of a blast damper provided with a framework;
Figure 2 is another schematic view of a blast damper provided with a framework;
Figure 3 shows schematically one embodiment of a framework according to the present invention in an assembled state;
Figure 4 shows schematically one embodiment of a mechanical joint between frame parts of the framework according to the present invention; and
Figure 5 shows schematically one embodiment of a clamping element of a mechanical joint according to the present invention.

### DETAILED DESCRIPTION OF THE INVENTION

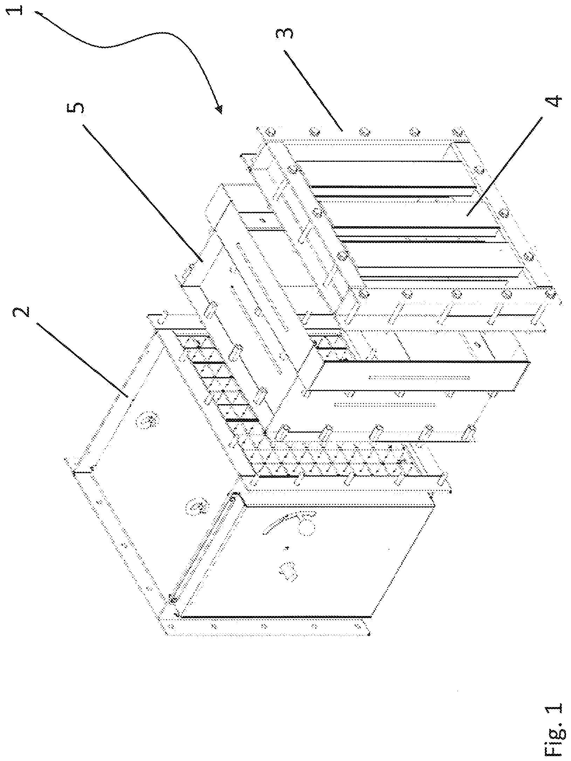

Figure 1 shows a blast damper 1 for protecting a ventilation system against pressure loads which occur in explosions, sudden fires or similar circumstances. The blast damper 1 comprises a pressure valve 2 comprising a body forming a flow channel for air flow through the pressure valve 2. The flow channel is closable such that when sudden increase of overpressure occurs the flow channel will be closed. The pressure valve 2 is preferably arranged inside a building but it also may be arranged outside of the building. The blast damper 1 further comprises a sand trap 3 for removing sand in the air flow before the air flow reaches the pressure valve 2 so that there will not be any sand in the air flow when flowing through the pressure valve 2 so that the pressure valve will not be damaged. The blast damper 1 further comprises a hurricane barrier 4 for preventing solid objects in the air flow from entering inside the pressure valve 2. The hurricane barrier is a structural element having necessary structural strength. The hurricane barrier 4 is arranged to stop any solid objects bigger than sand damaging the pressure valve 2 and entering the pressure valve 2 so that the pressure valve will not be damaged. The hurricane barrier 4 especially prevents for example objects released during explosion such as parts of plants or the like. The sand trap 3 and the hurricane barrier 4 are arranged together and to form a single barrier unit. This means that the sand trap 3 and the hurricane barrier 4 operate as a single barrier unit and the barrier unit is arranged in the blast damper 1 as a part of it. Alternatively the sand trap 3 and the hurricane barrier 4 may be provided as separate components of the blast damper 1. The barrier unit is the outermost part of the blast damper 1 which means that it is the first part that receives the pressure load toward the ventilation system. The barrier unit may be mounted on the outer surface of the building or it may be mounted inside the wall of the building as an embedded element. When the sand trap 3 and the hurricane barrier 4 are provided as separate components, the hurricane barrier is provided as the outer most part or component of the blast damper 1.

It should be noted that the blast damper 1 may also comprise only the pressure valve 2 and other components may be omitted.

The blast damper 1 further comprises a framework 5 for mounting the blast damper 1 to wall or wall structure of a building. In the context of this application the wall or wall structure means any wall, ceiling, roof, floor or other exterior wall of a building. The wall may be for example a concrete wall.

The framework 5 is mountable to the wall such that it forms a tight connection with the wall and does not allow any air leaks from a connecting surface between the wall and the framework 5. The framework 5 is preferably embedded to the wall such that it extends from the inner surface of the wall to the outer surface of the wall such that there is a mounting surface for other blast damper 1 components in the wall surface level in the framework 5. Therefore, the framework 5 may comprise a first mounting surface on the outer side of the wall and a second mounting surface on the inner side of the wall.

In the embodiment of figure 1 the framework 5 is arranged between the pressure valve 2 and the barrier unit, or sand trap 3 and hurricane barrier 4, such that the pressure valve 2 is arranged on the second mounting surface inside the building and the barrier unit is arranged on first mounting surface outside of the building. According to another embodiment of the invention the framework 5 may be arranged such that the pressure valve 2 and the barrier unit are arranged on the same side of the framework 5 which means that they both are either inside of the building or outside of the building.

The framework 5 may arranged in a wall during manufacturing of the wall, during casting of a concrete wall for example, such that the framework 5 and reinforcement in the wall form a wall having same strength properties as if there was no aperture in the wall at all. The concrete walls with the framework 5 installed to the wall during casting take pressure for example of 1 bar, or pressure greater than 1 bar, such that the concrete wall together with the blast damper 1 does not collapse during an explosion or fire. There are also no apertures or other holes between the framework 5 and the concrete wall.

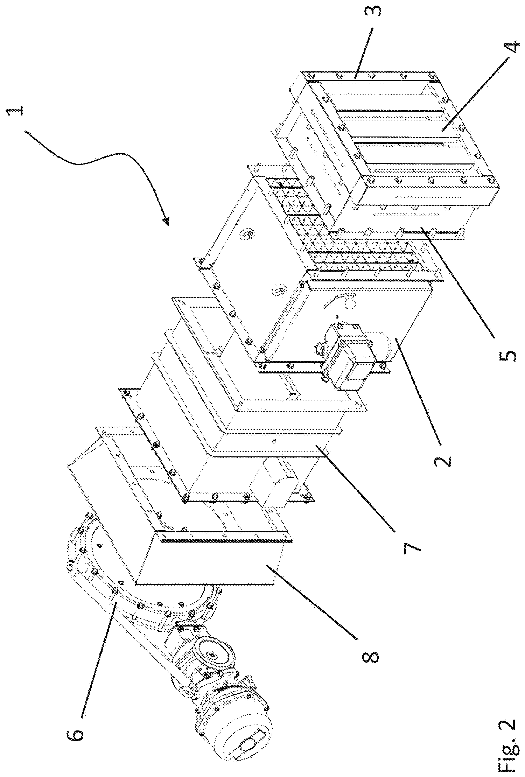

Figure 2 shows a blast damper 1 comprising a pressure valve 2, a sand trap 3, and a hurricane barrier 4, which the sand trap 3 and the hurricane barrier 4 form together a single barrier unit. The blast damper 1 further comprises a gas-tight valve 6 for controlling the air flow from the pressure valve 2 for preventing harmful gases entering inside a building. The pressure valve 2, the barrier unit and the gas-tight valve 6 are connected together for forming a blast damper 1. The blast damper 1 further comprises the framework 5 arranged to be installed in a wall or wall structure dividing a space as an inside and an outside, and said framework 5 forming a connection with the blast damper 1. The blast damper 1 may further comprise an adapter 8 between the gas-tight valve 6 and any previous component because of the difference in the aperture shapes in different components. The gas-tight valve 6 is usually round shaped when the other components may be rectangular. In one embodiment of the barrier unit is arranged on the side of the outer surface of the wall and the other components of the blast damper 1 is arranged on the side of the inner surface of the wall. The blast damper assembly 10 may further comprise additional elements such as a fire damper 7.

It should be noted that the blast damper 1 always comprises the pressure valve 2 and the framework 5, but all other components are optional and may be provided according to the requirements of the situation and utilization site.
In the embodiment of figure 2 the framework 5 is arranged between the pressure valve 2 and the barrier unit, or sand trap 3 and hurricane barrier 4, such that the pressure valve 2 is arranged on the second mounting surface inside the building and the barrier unit is arranged on first mounting surface outside of the building. According to another embodiment of the invention the framework 5 may be arranged such that the pressure valve 2 and the barrier unit are arranged on the same side of the framework 5 which means that they both are either inside of the building or outside of the building. The components of the blast damper may be arranged on either side of the framework 5 depending on the embodiment.

The framework 5 for installing and supporting a blast damper 1 to a wall of a building, the framework 5 comprises a frame 10, 11, 12, 13 forming a periphery of the framework 5. The components of the blast damper 1 are arranged to be installed and supported to the frame 10, 11, 12, 13. The framework further comprises a frame flow channel 15 through the framework 5. The frame flow channel 15 is defined by the frame 10, 11, 12, 13. 10.

The frame of the framework comprises at least two frame parts 10, 11, 12, 13 attached to each other for providing the framework 5. The at least two frame parts 10, 11, 12, 13 may be mechanically attached to each other with at least one mechanical joint 20 for providing the frame 10, 11, 12, 13 and frame low channel 15 of the framework 5. It should be noted that the framework 5 may comprise

The frame parts 10, 11, 12, 13 may be straight metal profiles. The profile of the frame parts 10, 11, 12, 13 may vary depending on the embodiment such that the pressure valve 2 and possible other components of the blast damper 1 may be installed and supported to the framework 5. The frame part 10, 11, 12, 13 may be manufactured from steel or some other metal. The framework 5 and/or the frame parts 10, 11, 12, 13 may also be manufactured from acid resisting metal, such as acid resistant stainless steel or some other acid resistant metal. The frame parts 10, 11, 12, 13 may also be curved for installing the framework 5 to an opening in the wall having at least partly curved shape.

The frame parts 10, 11, 12, 13 may straight or curved metal profiles laser cut into desired length. Laser cut frame parts 10, 11, 12, 13 have very accurate dimensions which is essential for achieving air tight connections between the framework 5 and the wall and also between to each other attached frame parts 10, 11, 1, 13.

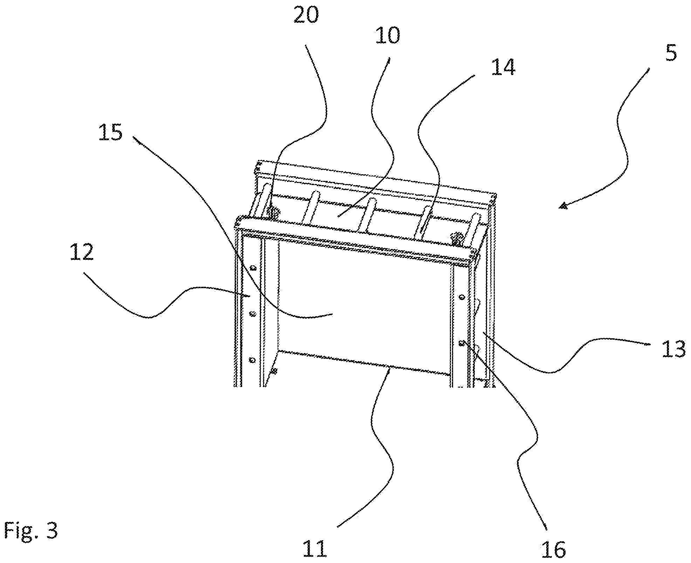

In the embodiment of figure 3 the framework 5 comprises two straight first frame parts 12, 13 and two straight second frame parts 10, 11 attached to each other with mechanical joints 20 for providing a rectangular framework 5 with a rectangular frame flow channel 15. The straight metal profiles may be profiles laser cut into desired length. Thus the laser cut frame parts 10, 11, 12, 13 may be attached in tight fit manner to each other. As shown in figure 3, the first frame parts 12, 13 are arranged to extend between the second frame parts 10, 11. Thus the end surfaces of the first frame parts 12, 13 are arranged against the inner side surfaces of the second frame parts 10, 11 such that a rectangular framework 5 is provided.

The frame 10, 11, 12, 13 may further comprise installation means 14, 16 for installing pressure valve 2 and possible other components of the blast damper 1 to the framework 5. The installation means may comprise attachment openings 16, such as bolt openings, provided to the frame parts 10, 11, 12, 13. The attachment openings may be provided with bolt tubes 14 extending between the opposite side surface of the framework, as shown in figure 3. The bolt tubes 14 enable covering the attachment bolts and providing closed tubes for bolts when the framework 5 is installed to the wall.

The frame parts 10, 11, 12, 13 are mechanically attached to each other with at least one mechanical joint 20 for providing the frame 10, 11, 12, 13. The mechanical joint 20 may comprise one or more securing elements 25, 26, 27 for securing the frame parts 10, 11, 12, 13 together. The securing elements 25, 26, 27 are used for mechanically securing and locking the frame parts 10, 11, 12, 13, possibly detachably, to each other. The securing means may be arranged to provide a bolt joint, mortise and tenon joint, cotter joint or slot joint, or any other type of mechanical attachment between the frame parts 10, 11, 12, 13. The mechanical joint 20 enables the framework 5 to be assembled at the installation site by attaching the frame parts 10, 11, 12, 13 to each other.

The securing elements 25, 26, 27 may further comprise one or more tightening members 26 for tightening the mechanical joint 20 and the frame parts 10, 11, 12, 13 together. The tightening member may comprise a lock pin, nut or any kind of mechanical tightener. The tightening member tightens the mechanical joint 20 such that the mechanical joint 20 and the frame parts 10, 11, 12, 13 may not be detached from each other or move relative to each other under pressure loads.

The mechanical joint 20 may also comprise one or more alignment elements 21, 23 for aligning frame parts 12, 13, 10, 12 relative to each other during assembling the framework 5. The alignment elements 21, 23 guide the frame parts 10, 11, 12, 13 to correct or desired position relative to each other during assembling the framework 5. Therefore, the alignment elements 21, 23 make the assembling of the framework 5 easier and faster, as well as prevent dislocating the frame pars 10, 11, 12, 13 relative to each other. Dislocating the frame parts 10, 11, 12, 13 could compromise the strength and tightness of the framework 5 and fitting of the frame parts 10, 11, 12, 13.

The mechanical joint 20 may further comprise one or more clamping elements 22, 24 for clamping the frame parts 10, 11, 12, 13 against each other. The one or more clamping element 22, 24 may be provided in connection with the one or more securing elements 25, 26, 27 and arranged to clamp the frame parts 12, 13, 10, 12 against each other upon securing the frame parts 10, 11, 12, 13 together with the one or more securing elements 25, 26, 27 and/or upon tightening the securing elements 25, 26, 27 with the tightening member 26. The camping elements 22, 24 are thus arranged to press the frame parts 10, 11, 12, 13 against each other and the clamping provides drawing or tension to the frame parts towards and against each other. The tension provides strength and rigidity to the framework such that the framework may have increased strength against pressure loads. The pressure load may originate from an explosion or the like sudden event. Furthermore, the pressure load may be casting load, such as casting load provided during casting of concrete, to which the framework is subjected during installation of the framework to the wall of a building.

Two separate frame parts 10, 11, 12, 13 may be attached to each other with one or more mechanical joints 20. For example when the framework 5 has rectangular shape and it is formed by four frame parts 10, 11, 12, 13, the frame parts 10, 11, 12, 13 may be attached to each other at the corners of the framework 5, as shown for example in embodiment of figure 3.

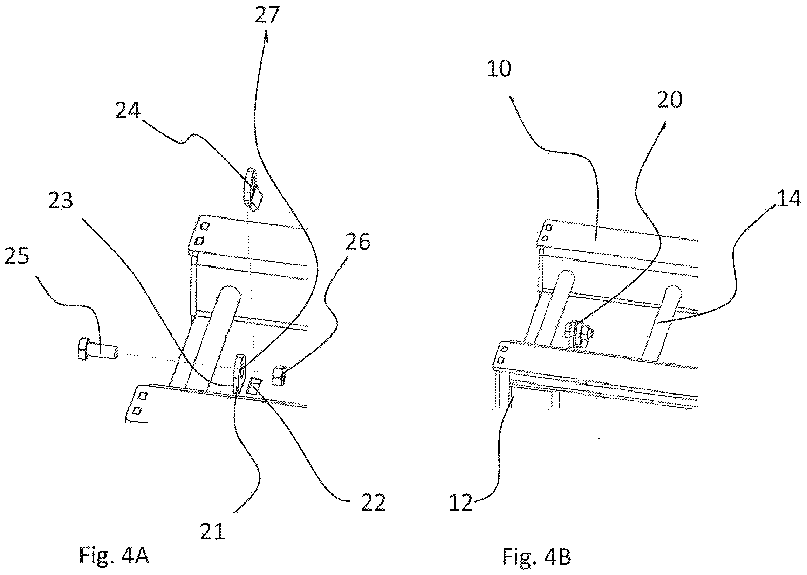

Figures 4A and 4B show in detail one embodiment of a framework 5 having the frame parts 10, 11, 12, 13 attached to each other with the mechanical joint 20. The mechanical joint 20 comprises alignment elements 21, 23 comprising one or more alignment pins 23 provided to a first frame part 12, 13. The alignment pins 23 may be provided to the end surfaces of the first frame parts 12, 13. The alignment elements may further comprise one or more alignment holes 21 provided to a second frame part 10, 11 for receiving the one or more alignment pins 23 of the first frame part 12, 13. Therefore, the end surfaces of the first frame parts 12, 13 are arranged against the inner side surface of the second frame parts 10, 11 such that the alignment pins 23 are placed into the alignment holes 21. The alignment pins 23 guide the frame parts 10, 11, 12, 13 to correct position relative to each other during assembling the framework 5.

As, shown in figures 4A and 4B at least one of the alignment holes 21 is a through hole extending through the second frame part 10, 11. Therefore, at least one of the alignment pins 23 may be arranged to extend through the at least one through hole 21. The at least one of the alignment pins 23 may be arranged to extend through the at least one through hole such that a connection end of the at least one alignment pin 23 protrudes from the at least one through hole 21. This enables securing the alignment pin 23 to the second frame parts 10, 11.

The one or more securing elements 25, 26, 27 comprise one or more mortises 27 provided to the one or more alignment pins 23. The one or more mortises may be provided to the connection end of at least one of the alignment pins 23 extending through the through hole 21. The securing elements may further comprise one or more tenons 25 arranged to be mounted into the one or more mortises 27 for securing the frame parts 10, 11, 12, 13 together.

According to the above mentioned the alignment elements 21, 23 are provided in connection of the securing elements 25, 26, 27, or vice versa. Alternatively, the alignment elements 21, 23 may be provided as part of the securing elements 25, 26, 27, or vice versa. Therefore, aligning and securing of the frame parts 10, 11, 12, 13 together may be combined such that frame parts 10, 11, 12, 13 are secured in correct position and orientation relative to each other.

The securing elements may further comprise a tightening member or a tightening nut 26 having a first thread and that the one or more tenons 25 is provided with a second thread mating with the first thread. The tenon 25 may be arranged through the mortise 27 provided to the alignment pin 23 and tightened with the tightening member or nut 26 for tightening the mechanical joint 20 and the frame parts 10, 11, 12, 13 together.

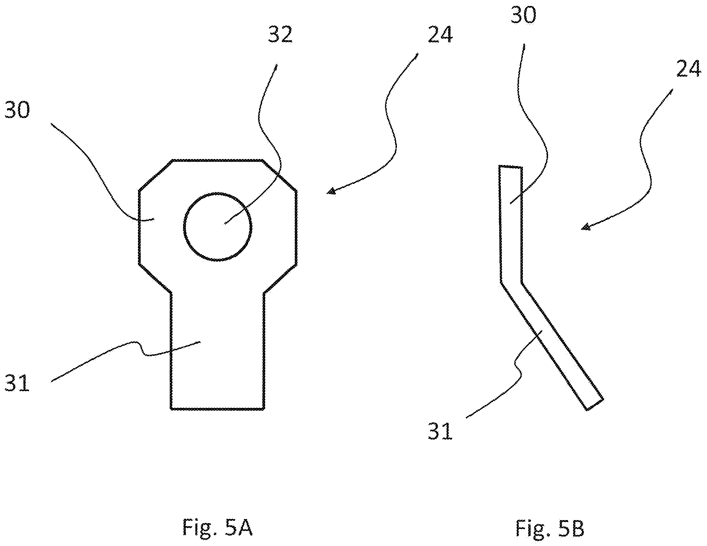

The mechanical joint 20 may also comprise one or more clamping elements 22, 24 for clamping the frame parts 10, 11, 12, 13 against each other. In the embodiment of figures 3, 4A and 4B, the one or more clamping elements 22, 24 comprise a clamping tab 24 arranged to clamp the frame parts 10, 11, 12, 13 against each other. The clamping tab 24 is shown in detain in figures 5A and 5B. The clamping tab 24 comprises a connection part 30 having one or more clamp mortises 32 for receiving the one or more tenons 25 and a clamping part 31 extending in an oblique angle from the connection part 30. The clamping elements may also comprise a clamping hole 22 for receiving the clamping tap 24. The clamping part 31 of the clamping tab 24 may be arranged into the clamping hole 22 such that upon securing and tightening the frame parts 12, 13, 10, 12 together with the one or more securing elements 25, 26, 27 the clamping tab 24 clamps the frame parts 10, 11, 12, 13 together. The clamping part 31 of the clamping tab 24 may be arranged into the clamping hole 22 such that upon securing and tightening the tenon 25 to the mortise of the alignment pin 23 and the clamping hole 22 of the clamping tab 24 with the tightening member 26 the clamping tab 24 clamps the frame parts 10, 11, 12, 13 together.

In the embodiment of figures 3A, 3B, 4A, 4B, 5A and 5B the clamping tab 24 is a separate part arranged in connection with the securing elements 25, 26, 27 such that the tenon 25 is placed through the clamp mortise 32 and the clamping tab 24 is tightened and secured simultaneously with securing and tightening the securing elements 25, 26, 27. The clamping hole 22 is a separate hole provided to the second frame part 10, 11 close or in vicinity of the alignment hole 21. The oblique clamping part 31 of the clamping tab 24 may be placed into the clamping hole 22.

In an alternative embodiment the clamping hole 22 may be the same hole as the alignment hole 21 such that the clamping tab 24 may be arranged into the alignment hole 21 together with the alignment pin 23. Alternative the clamping tab 24 may also be an integral part or fixed to the second frame parts 10, 11.

Figures 5A and 5B show ne embodiment of the clamping tab 24. The clamping tab 24 comprises a connection part 30 having one or more clamp mortises 32 for receiving the one or more tenons 25 and a clamping part 31 extending in an oblique angle from the connection part 30. The oblique clamping part 31 extending in an angle from the connection part 31 provides the clamping and causes the frame parts 10, 11, 12, 13 to be pressed against each other when the frame parts 10, 11, 12, 13 are secured and tightened together.

The framework 5 having the at least two frame parts 10, 11, 12, 13 mechanically attached to each other with at least one mechanical joint 20 may further be hot galvanized or hot dip galvanized.

The framework 5 described above may be used in a blast damper 1 for protecting a ventilation system of a building against pressure loads. The blast damper 1 comprises in addition to the framework 5 a pressure valve 2 and possibly one or more of the following: a sand trap 3 for removing sand in the air flow before reaching the pressure valve 2, a hurricane barrier 4 for preventing solid objects in the air flow from entering inside the pressure valve 2, a gas-tight valve 6 for controlling the air flow from the pressure valve 2, and a fire damper 7.

The framework 5 may prepared by assembling the frame parts 10, 11, 12, 13 using the mechanical joint 20 for forming a framework 5 for a blast damper 1 and to which frame 10, 11, 12, 13 of the framework 5 components of the blast damper 1 are arranged to be installed and supported. The framework 5, the mechanical joint 20 and the blast damper 1 may be as described above. The framework 5 may comprise the frame 10, 11, 12, 13 forming a periphery of the framework 5 and a frame flow channel 15 through the framework 5, the frame flow channel 15 being defined by the frame 10, 11, 12, 13. The method for preparing the framework may comprise providing at least two frame parts 10, 11, 12, 13 having elements 21, 22, 23, 24, 25, 26, 27 for forming a mechanical joint 20 between the at least two frame parts 10, 11, 12, 13 such that the at least two frame parts 10, 11, 12, 13 are aligned relative to each other, secured to each other and clamped against each other. In the method the framework 5 is assembled and the frame parts 10, 11, 12, 13 are secured together with the mechanical joint 20.

The method comprises assembling the framework 5 by installing the frame parts 10, 11, 12, 13 together and aligning the frame parts 10, 11, 12, 13 relative to each other with alignment elements 21, 23 of the mechanical joint 20. The method may further comprise securing the assembled frame parts 10, 11, 12, 13 to each other with securing elements 25, 27 of the mechanical joint 20. The assembling of the framework 5 may comprise aligning the frame parts 10, 11, 12, 13 relative to each other by placing one or more alignment pins 23 provided to a first frame part 12, 13 into one or more alignment holes 21 provided to a second frame part 10, 11.

Securing the assembled frame parts 10, 11, 12, 13 may comprise tightening the securing elements 25, 27 with a tightening member or a tightening nut 26. The securing of the assembled frame parts 10, 11, 12, 13 may further comprises placing one or more tenons 25 into one or more mortises 27 provided to the one or more alignment pins 23 for securing the frame parts 10, 11, 12, 13 together. The securing of the assembled frame parts 10, 11, 12, 13 may also comprises placing one or more tenons 25 into one or more mortises 27 provided to the one or more alignment pins (23) for securing the frame parts 10, 11, 12, 13 together and tightening the securing elements 25, 27 with a tightening member or a tightening nut 26.

The method may further comprise clamping the frame parts 10, 11, 12, 13 against each other with one or more clamping elements 22, 24 provided in connection with the one or more securing elements 25, 26, 27 during securing the frame parts 12, 13, 10, 12 such that a tension is formed between the frame parts 10, 11, 12, 13.

The assembled, secured and clamped framework 5 may further be hot galvanized or hot dip galvanized. The galvanizing provides additional strength to the framework 5 and locks the frame parts 10, 11, 12, 13 together and the mechanical joint 20.

It will be obvious to a person skilled in the art that, as the technology advances, the inventive concept can be implemented in various ways. The invention and its embodiments are not limited to the examples described above but may vary within the scope of the claims.

## Claims

1. A framework (5) for installing and supporting a blast damper (1) to a wall of a building, the framework (5) comprising:
- a frame (10, 11, 12, 13) forming a periphery of the framework (5) and to which frame (10, 11, 12, 13) components of the blast damper (1) are arranged to be installed and supported; and
- a frame flow channel (15) through the framework (5), the frame flow channel (15) being defined by the frame (10, 11, 12, 13),
**characterized in that** the frame (10, 11, 12, 13) comprises at least two frame parts (10, 11, 12, 13) mechanically attached to each other with at least one mechanical joint (20) for providing the frame (10, 11, 12, 13), and that the mechanical joint (20) further comprises one or more clamping elements (22, 24) for clamping the frame parts (10, 11, 12, 13) against each other; and the one or more clamping elements (22, 24) comprise a clamping tab (24) comprising a connection part (30) having one or more clamp mortises (32) for receiving the one or more tenons (25) and a clamping part (31) extending in an oblique angle from the connection part (30).

2. A framework (5) according to claim 1, **characterized in that** the mechanical joint (20) comprises:
- one or more alignment elements (21, 23) for aligning frame parts (12, 13, 10, 11) relative to each other; and
- one or more securing elements (25, 26, 27) for securing the frame parts (12, 13, 10, 11) together.

3. A framework (5) according to claim 2, **characterized in that** the one or more alignment elements (21, 23) comprise:
- one or more alignment pins (23) provided to a first frame part (12, 13); and
- one or more alignment holes (21) provided to a second frame part (10, 11) for receiving the one or more alignment pins (23) of the first frame part (12, 13).

4. A framework (5) according to claim 2 or 3, **characterized in that** the one or more securing elements (25, 26, 27) are arranged to provide a bolt joint, mortise and tenon joint, cotter joint or slot joint.

5. A framework (5) according to any one of claims 2 to 4, **characterized in that** the one or more securing elements (25, 26, 27) comprise:
- one or more mortises (27) provided to the one or more alignment pins (23); and
- one or more tenons (25) arranged to be mounted into the one or more mortises (27) for securing the frame parts (12, 13, 10, 11) together.

6. A framework (5) according to claim 5, **characterized in that**:
- at least one of the alignment holes (21) is through hole extending through the second frame part (10, 11), and at least one of the alignment pins (23) is arranged to extend through the at least one through hole; or
- at least one of the alignment holes (21) is through hole extending through the second frame part (10, 11), and at least one of the alignment pins (23) is arranged to extend through the at least one through hole such that a connection end of the at least one alignment pin (23) protrudes from the at least one through hole (21), and that the connection end is provided with the one or more mortises (27) for receiving the one or more tenons (25).

7. A framework (5) according to any one of claims 2 to 6, **characterized in that**:
- the one or more securing elements (25, 26, 27) further comprise a tightening member (26); or
- the one or more securing elements (25, 26, 27) further comprise a tightening member or a tightening nut (26) having a first thread and that the one or more tenons (25) is provided with a second thread mating with the first thread.

8. A framework (5) according to any one of claims 1 to 7, **characterized in that**:
- the one or more clamping elements (22, 24) being provided in connection with the one or more securing elements (25, 26, 27) and arranged to clamp the frame parts (12, 13, 10, 11) against each other upon securing the frame parts (12, 13, 10, 11) together with the one or more securing elements (25, 26, 27).

9. A framework (5) according to claim 8, **characterized in that** the one or more clamping elements (22, 24) comprise a clamping hole (22), and that the clamping part (31) of the clamping tab (24) is arranged into the clamping hole (22) such that upon securing and tightening the frame parts (12, 13, 10, 11) together with the one or more securing elements (25, 26, 27) the clamping tab (24) clamps the frame parts (12, 13, 10, 11) together; or
a clamping hole (22), and that the clamping part (31) of the clamping tab (24) is arranged into the clamping hole (22) such that upon securing and tightening the tenon (25) to the mortise of the alignment pin (23) and the clamping hole (22) of the clamping tab (24) with the tightening member (26) the clamping tab (24) clamps the frame parts (12, 13, 10, 11) together.

10. A framework (5) according to any one of claims 1 to 9, **characterized in that**;
- the frame parts (12, 13, 10, 11) are straight metal profiles; or
- the frame parts (12, 13, 10, 11) are straight metal profiles laser cut into desired length; or
- the framework (5) comprises two straight first frame parts (12, 13) and two straight second frame parts (10, 11) attached to each other for providing a rectangular framework (5) with a rectangular frame flow channel (15), or
- the framework (5) comprises two straight first frame parts (12, 13) and two straight second frame parts (10, 11) attached to each other for providing a rectangular framework (5) with a rectangular frame flow channel (15), the straight metal profiles being profiles laser cut into desired length.

11. A framework (5) according to any one of claims 1 to 10, **characterized in that** the framework (5) having the at least two frame parts (10, 11, 12, 13) mechanically attached to each other with at least one mechanical joint (20) is hot galvanized or hot dip galvanized.

12. A blast damper (1) for protecting a ventilation system of a building against pressure loads, the blast damper (1) comprising:
- a framework (5) according to any one of claims 1 to 11 arranged to be mounted to a wall of the building, the framework (5) comprising a frame (10, 11, 12, 13) forming a frame flow channel (15) through the framework (5) and the wall of the building; and
- a pressure valve (2) comprising a body forming a valve flow channel for air flow through the pressure valve (2), the pressure valve being arranged to close the flow channel as a response to sudden increase of overpressure, the pressure valve (2) being arranged to be mounted to the framework (5),
the frame comprises at least two frame parts (10, 11) mechanically attached to each other with at least one mechanical joint (20) for providing the frame (10, 11, 12, 13), **characterized**in that the mechanical joint (20) further comprises one or more clamping elements (22, 24) for clamping the frame parts (12, 13, 10, 11) against each other; and the one or more clamping elements (22, 24) comprise a clamping tab (24) comprising a connection part (30) having one or more clamp mortises (32) for receiving the one or more tenons (25) and a clamping part (31) extending in an oblique angle from the connection part (30).

13. A blast damper (1) according to claim 12, **characterized in that** the blast damper (1) comprises:
- the one or more securing elements (25, 26, 27) for securing the frame parts (12, 13, 10, 11) together.

14. A blast damper (1) according to claim 12 or 13, **characterized in that** the blast damper (1) further comprises one or more alignment elements (21, 23) for aligning frame parts (12, 13, 10, 11) relative to each other.

15. A blast damper (1) according to any one of claims 12 to 14, **characterized in that** the blast damper (1) comprises at least one of the following:
- a sand trap (3) for removing sand in the air flow before reaching the pressure valve (2);
- a hurricane barrier (4) for preventing solid objects in the air flow from entering inside the pressure valve (2);
- a gas-tight valve (6) for controlling the air flow from the pressure valve (2); and
- a fire damper (7).

16. A method for preparing a framework (5) for a blast damper (1) and to which frame (10, 11, 12, 13) components of the blast damper (1) are arranged to be installed and supported, the framework (5) having a frame (10, 11, 12, 13) forming a periphery of the framework (5) and a frame flow channel (15) through the framework (5), the frame flow channel (15) being defined by the frame (10, 11, 12, 13),
**characterized in that** the method comprises:
- providing at least two frame parts (10, 11, 12, 13) having elements (21, 22, 23, 24, 25, 26, 27) for forming a mechanical joint (20) between the at least two frame parts (10, 11, 12, 13) such that the at least two frame parts (10, 11, 12, 13) are aligned relative to each other, secured to each other and clamped against each other;
- assembling the framework (5) and securing the frame parts (10, 11, 12, 13) together with a mechanical joint (20);
- clamping the frame parts against each other with one or more clamping elements (22, 24) which comprise a clamping tab (24) comprising a connection part (30) having one or more clamp mortises (32) for receiving the one or more tenons (25) and a clamping part (31) extending in an oblique angle from the connection part (30), provided in connection with the one or more securing elements (25, 26, 27) during securing the frame parts (12, 13, 10, 11) such that a tension is formed between the frame parts (10, 11, 12, 13).

17. A method according to claim 16, **characterized by**:
- assembling the framework (5) by installing the frame parts (10, 11, 12, 13) together and aligning the frame parts (10, 11, 12, 13) relative to each other with alignment elements (21, 23) of the mechanical joint (20);
- securing the assembled frame parts (10, 11, 12, 13) to each other with securing elements (25, 27) of the mechanical joint (20).

18. A method according to claim 16 or 17, **characterized in that** the assembling of the framework (5) comprises aligning the frame parts (10, 11, 12, 13) relative to each other by placing one or more alignment pins (23) provided to a first frame part (12, 13) into one or more alignment holes (21) provided to a second frame part (10, 11).

19. A method according to claim 17 or 18, **characterized in that**:
- securing the assembled frame parts (10, 11, 12, 13) comprises tightening the securing elements (25, 27) with a tightening member or a tightening nut (26); or
- securing the assembled frame parts (10, 11, 12, 13) comprises placing one or more tenons (25) into one or more mortises (27) provided to the one or more alignment pins (23) for securing the frame parts (12, 13, 10, 11) together; or
- securing the assembled frame parts (10, 11, 12, 13) comprises placing one or more tenons (25) into one or more mortises (27) provided to the one or more alignment pins (23) for securing the frame parts (12, 13, 10, 11) together and tightening the securing elements (25, 27) with a tightening member or a tightening nut (26).

20. A method according to any one of claims 16 to 19, **characterized in that** the method further comprises hot galvanizing or hot dip galvanizing the assembled, secured and clamped framework (5).

## Patentansprüche

1. Rahmenkonstruktion (5) zur Installation und Halterung einer Druckentlastungsklappe (1) an einer Wand eines Gebäudes, wobei die Rahmenkonstruktion (5) umfasst:
- einen Rahmen (10, 11, 12, 13), der eine Peripherie der Rahmenkonstruktion (5) ausbildet und an welchem Rahmen (10, 11, 12, 13) eingerichtete Komponenten der Druckentlastungsklappe (1) zu installieren und zu haltern sind; und
- einen Rahmendurchströmungskanal (15) durch die Rahmenkonstruktion (5), wobei der Rahmendurchströmungskanal (15) durch den Rahmen (10, 11, 12, 13) definiert ist,
**dadurch gekennzeichnet, dass** der Rahmen (10, 11, 12, 13) mindestens zwei Rahmenteile (10, 11, 12, 13) umfasst, die mit mindestens einer mechanischen Verbindung (20) mechanisch aneinander befestigt sind, um den Rahmen (10, 11, 12, 13) bereitzustellen, und dass die mechanische Verbindung (20) ferner ein oder mehrere Spannelemente (22, 24) umfasst, um die Rahmenteile (10, 11, 12, 13) gegeneinander zu verspannen; und das eine oder die mehreren Spannelemente (22, 24) eine Klemmzunge (24) umfassen, die einen Anschlussteil (30), der eine oder mehrere Klemmzapfenlöcher (32) zur Aufnahme des einen oder der mehreren Zapfen (25) aufweist, und einen Klemmteil (31), der schrägwinklig vom Anschlussteil (30) abgeht, umfasst.

2. Rahmenkonstruktion (5) nach Anspruch 1, **dadurch gekennzeichnet, dass** die mechanische Verbindung (20) umfasst:
- ein oder mehrere Ausrichtungselemente (21, 23), um die Rahmenteile (12, 13, 10, 11) zueinander auszurichten; und
- ein oder mehrere Befestigungselemente (25, 26, 27), um die Rahmenteile (12, 13, 10, 11) aneinander zu befestigen.

3. Rahmenkonstruktion (5) nach Anspruch 2, **dadurch gekennzeichnet, dass** das eine oder die mehreren Ausrichtungselemente (21, 23) umfassen:
- einen oder mehrere an einem ersten Rahmenteil (12, 13) vorgesehene Passstifte (23); und
- ein oder mehrere an einem zweiten Rahmenteil (10, 11) vorgesehene Passlöcher (21) zur Aufnahme des einen oder der mehreren Passstifte (23) des ersten Rahmenteils (12, 13).

4. Rahmenkonstruktion (5) nach Anspruch 2 oder 3, **dadurch gekennzeichnet, dass** das eine oder die mehreren Befestigungselemente (25, 26, 27) dazu eingerichtet sind, eine Schraubverbindung, eine Zapfenverbindung, eine Keilverbindung oder eine Nutverbindung bereitzustellen.

5. Rahmenkonstruktion (5) nach einem der Ansprüche 2 bis 4,
**dadurch gekennzeichnet, dass** das eine oder die mehreren Befestigungselemente (25, 26, 27) umfassen:
- ein oder mehrere Zapfenlöcher (27), die an dem einen oder den mehreren Passstiften (23) vorgesehen sind; und
- ein oder mehrere Zapfen (25), die dazu eingerichtet sind, in das eine oder die mehreren Zapfenlöcher (27) eingebaut zu werden, um die Rahmenteile (12, 13, 10, 11) aneinander zu befestigen.

6. Rahmenkonstruktion (5) nach Anspruch 5, **dadurch gekennzeichnet, dass**:
- mindestens eines der Passlöcher (21) ein Durchgangsloch ist, das sich durch den zweiten Rahmenteil (10, 11) hindurch erstreckt, und mindestens einer der Passstifte (23) so angeordnet ist, dass er sich durch das mindestens eine Durchgangsloch hindurch erstreckt; oder
- mindestens eines der Passlöcher (21) ein Durchgangsloch ist, das sich durch den zweiten Rahmenteil (10, 11) hindurch erstreckt, und mindestens einer der Passstifte (23) so eingerichtet ist, dass er sich durch das mindestens eine Durchgangsloch hindurch erstreckt, so dass ein Anschlussende des mindestens einen Passstiftes (23) aus dem mindestens einen Durchgangsloch (21) vorspringt, und dass das Anschlussende mit dem einen oder den mehreren Zapfenlöchern (27) zur Aufnahme des einen oder der mehreren Zapfen (25) versehen ist.

7. Rahmenkonstruktion (5) nach einem der Ansprüche 2 bis 6,
**dadurch gekennzeichnet, dass**:
- das eine oder die mehreren Befestigungselemente (25, 26, 27) ferner ein Sicherungselement (26) umfassen; oder
- das eine oder die mehreren Befestigungselemente (25, 26, 27) ferner ein Sicherungselement oder eine Sicherungsmutter (26) mit einem ersten Gewinde umfassen und dass der eine oder die mehreren Zapfen (25) mit einem zweiten Gewinde versehen sind, das in das erste Gewinde greift.

8. Rahmenkonstruktion (5) nach einem der Ansprüche 1 bis 7,
**dadurch gekennzeichnet, dass**:
- das eine oder die mehreren Spannelemente (22, 24) in Verbindung mit dem einen oder den mehreren Befestigungselementen (25, 26, 27) vorgesehen sind und so eingerichtet sind, dass sie die Rahmenteile (12, 13, 10, 11) gegeneinander verspannen, wenn die Rahmenteile (12, 13, 10, 11) mit dem einen oder den mehreren Befestigungselementen (25, 26, 27) aneinander befestigt werden.

9. Rahmenkonstruktion (5) nach Anspruch 8, **dadurch gekennzeichnet, dass** das eine oder die mehreren Spannelemente (22, 24)
ein Klemmloch (22) umfassen, und dass der Klemmteil (31) der Klemmzunge (24) im Klemmloch (22) angeordnet wird, so dass, wenn die Rahmenteile (12, 13, 10, 11) mit dem einen oder den mehreren Befestigungselementen (25, 26, 27) aneinander befestigt und gesichert werden, die Klemmzunge (24) die Rahmenteile (12, 13, 10, 11) miteinander verspannt; oder
ein Klemmloch (22) umfassen, und dass der Klemmteil (31) der Klemmzunge (24) im Klemmloch (22) angeordnet wird, so dass, wenn der Zapfen (25) am Zapfenloch des Passstiftes (23) und das Klemmloch (22) der Klemmzunge (24) mit dem Sicherungselement (26) befestigt und gesichert wird, die Klemmzunge (24) die Rahmenteile (12, 13, 10, 11) miteinander verspannt.

10. Rahmenkonstruktion (5) nach einem der Ansprüche 1 bis 9,
**dadurch gekennzeichnet, dass**;
- die Rahmenteile (12, 13, 10, 11) gerade Metallprofile sind; oder
- die Rahmenteile (12, 13, 10, 11) gerade Metallprofile sind, die mittels Laser auf die gewünschte Länge geschnitten wurden; oder
- die Rahmenkonstruktion (5) zwei gerade erste Rahmenteile (12, 13) und zwei gerade zweite Rahmenteile (10, 11) umfasst, die aneinander befestigt sind, um eine rechteckige Rahmenkonstruktion (5) mit einem rechteckigen Rahmendurchströmungskanal (15) bereitzustellen; oder
- die Rahmenkonstruktion (5) zwei gerade erste Rahmenteile (12, 13) und zwei gerade zweite Rahmenteile (10, 11) umfasst, die aneinander befestigt sind, um eine rechteckige Rahmenkonstruktion (5) mit einem rechteckigen Rahmendurchströmungskanal (15) bereitzustellen, wobei es sich bei den geraden Metallprofilen um Profile handelt, die mittels Laser auf eine gewünschte Länge geschnitten wurden.

11. Rahmenkonstruktion (5) nach einem der Ansprüche 1 bis 10,
**dadurch gekennzeichnet, dass** die Rahmenkonstruktion (5), die die mindestens zwei mit mindestens einer mechanischen Verbindung (20) aneinander mechanisch befestigten Rahmenteile (10, 11, 12, 13) aufweist, feuerverzinkt oder tauchfeuerverzinkt sind.

12. Druckentlastungsklappe (1) zum Schützen eines Lüftungssystems eines Gebäudes vor Drucklasten, wobei die Druckentlastungsklappe (1) umfasst:
- eine Rahmenkonstruktion (5) nach einem der Ansprüche 1 bis 11, die dazu eingerichtet ist, an einer Wand des Gebäudes montiert zu werden, wobei die Rahmenkonstruktion (5) einen Rahmen (10, 11, 12, 13) umfasst, der einen Rahmendurchströmungskanal (15) durch die Rahmenkonstruktion (5) und die Wand des Gebäudes hindurch ausbildet; und
- ein Druckventil (2), das ein Gehäuse umfasst, das einen Ventildurchströmungskanal für einen Luftstrom durch das Druckventil (2) hindurch ausbildet, wobei das Druckventil dazu eingerichtet ist, den Strömungskanal in Reaktion auf einen plötzlichen Überdruckanstieg zu schließen, wobei das Druckventil (2) dazu eingerichtet ist, an der Rahmenkonstruktion (5) montiert zu werden,
wobei der Rahmen mindestens zwei Rahmenteile (10, 11) umfasst, die mit mindestens einer mechanischen Verbindung (20) aneinander befestigt sind, um den Rahmen (10, 11, 12, 13) bereitzustellen, **dadurch gekennzeichnet, dass** die mechanische Verbindung (20) ferner ein oder mehrere Spannelemente (22, 24) umfasst, um die Rahmenteile (12, 13, 10, 11) gegeneinander zu verspannen; und das eine oder die mehreren Spannelemente (22, 24) eine Klemmzunge (24) umfassen, die einen Anschlussteil (30), der eine oder mehrere Klemmzapfenlöcher (32) zur Aufnahme des einen oder der mehreren Zapfen (25) aufweist, und einen Klemmteil (31), der schrägwinklig vom Anschlussteil (30) abgeht, umfasst.

13. Druckentlastungsklappe (1) nach Anspruch 12, **dadurch gekennzeichnet, dass** die Druckentlastungsklappe (1) umfasst:
- das eine oder die mehreren Befestigungselemente (25, 26, 27), um die Rahmenteile (12, 13, 10, 11) aneinander zu befestigen.

14. Druckentlastungsklappe (1) nach Anspruch 12 oder 13, **dadurch gekennzeichnet, dass** die Druckentlastungsklappe (1) ferner ein oder mehrere Ausrichtungselemente (21, 23) umfasst, um die Rahmenteile (12, 13, 10, 11) zueinander auszurichten.

15. Druckentlastungsklappe (1) nach einem der Ansprüche 12 bis 14,
**dadurch gekennzeichnet, dass** die Druckentlastungsklappe (1) mindestens eines von Folgendem umfasst:
- einen Sandfänger (3), um Sand aus dem Luftstrom zu entfernen, bevor dieser das Druckventil (2) erreicht;
- einen Sturmschutz (4), um zu verhindern, dass im Luftstrom enthaltene feste Gegenstände in das Innere des Druckventils (2) gelangen;
- ein gasdichtes Ventil (6), um den ausgehenden Luftstrom des Druckventils (2) zu regeln; und
- eine Brandschutzklappe (7).

16. Verfahren zur Vorbereitung einer Rahmenkonstruktion (5) für eine Druckentlastungsklappe (1) und an welchem Rahmen (10, 11, 12, 13) eingerichtete Komponenten der Druckentlastungsklappe (1) zu installieren und zu haltern sind, wobei die Rahmenkonstruktion (5) einen Rahmen (10, 11, 12, 13) aufweist, der eine Peripherie der Rahmenkonstruktion (5) und einen Rahmendurchströmungskanal (15) durch die Rahmenkonstruktion (5) hindurch ausbildet, wobei der Rahmendurchströmungskanal (15) durch den Rahmen (10, 11, 12, 13) definiert ist,
**dadurch gekennzeichnet, dass** das Verfahren umfasst:
- Bereitstellen von mindestens zwei Rahmenteilen (10, 11, 12, 13), die Elemente (21, 22, 23, 24, 25, 26, 27) zur Ausbildung einer mechanischen Verbindung (20) zwischen den mindestens zwei Rahmenteilen (10, 11, 12, 13) aufweisen, dergestalt, dass die mindestens zwei Rahmenteile (10, 11, 12, 13) zueinander ausgerichtet, aneinander befestigt und gegeneinander verspannt werden;
- Zusammenbauen der Rahmenkonstruktion (5) und Befestigung der Rahmenteile (12, 20, 10, 11) aneinander mit einer mechanischen Verbindung (20);
- gegenseitiges Verspannen der Rahmenteile mit einem oder mehreren Spannelementen (22, 24), die eine Klemmzunge (24) umfassen, die einen Anschlussteil (30), der eine oder mehrere Klemmzapfenlöcher (32) zur Aufnahme des einen oder der mehreren Zapfen (25) aufweist, und einen Klemmteil (31), der schrägwinklig vom Anschlussteil (30) abgeht, was in Verbindung mit dem einen oder den mehreren Befestigungselementen (25, 26, 27) während der Befestigung der Rahmenteile (12, 13, 10, 11) erfolgt, so dass zwischen den Rahmenteilen (10, 11, 12, 13) eine Spannung ausgebildet wird.

17. Verfahren nach Anspruch 16, **gekennzeichnet durch**:
- Zusammenbauen der Rahmenkonstruktion (5), indem die Rahmenteile (10, 11, 12, 13) zusammengefügt und die Rahmenteile (10, 11, 12, 13) mit Ausrichtungselementen (21, 23) der mechanischen Verbindung (20) zueinander ausgerichtet werden;
- Gegenseitiges Befestigen der zusammengebauten Rahmenteile (12, 20, 10, 11) mit Befestigungselementen (25, 27) der mechanischen Verbindung (20).

18. Verfahren nach Anspruch 16 oder 17, **dadurch gekennzeichnet, dass** das Zusammenbauen der Rahmenkonstruktion (5) umfasst: Ausrichten der Rahmenteile (10, 11, 12, 13) zueinander, indem ein oder mehrere Passstifte (23), die an einem ersten Rahmenteil (12, 13) vorgesehen sind, in ein oder mehrere Passlöcher (21), die an einem zweiten Rahmenteil (10, 11) vorgesehen sind, platziert werden.

19. Verfahren nach Anspruch 17 oder 18, **dadurch gekennzeichnet, dass**:
- das Befestigen der zusammengebauten Rahmenteile (10, 11, 12, 13) umfasst, dass die Befestigungselemente (25, 27) mit einem Sicherungselement oder einer Sicherungsmutter (26) gesichert werden; oder
- das Befestigen der zusammengebauten Rahmenteile (10, 11, 12, 13) umfasst, dass ein oder mehrere Zapfen (25) in ein oder mehrere Zapfenlöcher (27), die an dem einen oder den mehreren Passstiften (23) vorgesehen sind, positioniert werden, um die Rahmenteile (12, 13, 10, 11) aneinander zu befestigen; oder
- das Befestigen der zusammengebauten Rahmenteile (10, 11, 12, 13) umfasst, dass ein oder mehrere Zapfen (25) in ein oder mehrere Zapfenlöcher (27), die an dem einen oder den mehreren Passstiften (23) vorgesehen sind, positioniert werden, um die Rahmenteile (12, 13, 10, 11) aneinander zu befestigen, und die Befestigungselemente (25, 27) mit einem Sicherungselement oder einer Sicherungsmutter (26) gesichert werden.

20. Verfahren nach einem der Ansprüche 16 bis 19, **dadurch gekennzeichnet , dass** das Verfahren ferner umfasst: Feuerverzinken oder Tauchfeuerverzinken der zusammengebauten, befestigten und verspannten Rahmenkonstruktion (5).

## Revendications

1. Bâti (5) pour installer et appuyer un clapet de surpression (1) sur un mur d'un bâtiment, ledit bâti (5) comprenant :
- un cadre (10, 11, 12, 13) formant une périphérie du bâti (5) et sur ce cadre (10, 11, 12, 13) des composants agencés du clapet de surpression (1) sont à installer et appuyer ; et
- un canal de passage (15) à travers le bâti (5), ledit canal de passage (15) étant défini par le cadre (10, 11, 12, 13),
**caractérisé en ce que** le cadre (10, 11, 12, 13) comprend au moins deux parties de cadre (10, 11, 12, 13) mécaniquement attachées entre elles avec au moins un joint mécanique (20) pour fournir le cadre (10, 11, 12, 13) et que le joint mécanique (20) comprend également un ou plusieurs éléments de serrage (22, 24) pour serrer les parties de cadre (10, 11, 12, 13) l'une contre l'autre ; et que lesdits un ou plusieurs éléments de serrage (22, 24) comprennent une languette de serrage (24) comportant une partie de raccordement (30) présentant une ou plusieurs mortaises de serrage (32) pour recevoir lesdits un ou plusieurs tenons (25), et une partie de serrage (31) s'étendant à un angle oblique par rapport à la partie de raccordement (30).

2. Bâti (5) selon la revendication 1, **caractérisé en ce que** le joint mécanique (20) comprend :
- un ou plusieurs éléments d'alignement (21, 23) pour aligner des parties de cadre (12, 13, 10, 11) les unes par rapport aux autres ; et
- un ou plusieurs éléments de fixation (25, 26, 27) pour fixer les parties de cadre (12, 13, 10, 11) entre elles.

3. Bâti (5) selon la revendication 2, **caractérisé en ce que** lesdits un ou plusieurs éléments d'alignement (21, 23) comprennent :
- un ou plusieurs ergots d'alignement (23) prévus sur une première partie de cadre (12, 13) ; et
- un ou plusieurs trous d'alignement (21) prévus sur une deuxième partie de cadre (10, 11) pour recevoir lesdits un ou plusieurs ergots d'alignement (23) de la première partie de cadre (12, 13).

4. Bâti (5) selon la revendication 2 ou 3, **caractérisé en ce que** lesdits un ou plusieurs éléments de fixation (25, 26, 27) sont agencés pour fournir un joint boulonné, un joint à mortaise et tenon, un joint à clavette ou un joint à rainure.

5. Bâti (5) selon l'une des revendications 2 à 4, **caractérisé en ce que** lesdits un ou plusieurs éléments de fixation (25, 26, 27) comprennent :
- une ou plusieurs mortaises (27) prévues auxdits un ou plusieurs ergots d'alignement (23) ; et
- un ou plusieurs tenons (25) agencés pour être montés dans lesdites une ou plusieurs mortaises (27) pour la fixation des parties de cadre (12, 13, 10, 11) entre elles.

6. Bâti (5) selon la revendication 5, **caractérisé en ce que** :
- au moins l'un des trous d'alignement (21) est un trou de passage s'étendant à travers la deuxième partie de cadre (10, 11), et au moins l'un des ergots d'alignement (23) est agencé pour s'étendre à travers ledit au moins un trou de passage ; ou
- au moins l'un des trous d'alignement (21) est un trou de passage s'étendant à travers la deuxième partie de cadre (10, 11), et au moins l'un des ergots d'alignement (23) est agencé pour s'étendre à travers ledit au moins un trou de passage de telle façon qu'une extrémité de raccordement dudit au moins un ergot d'alignement (23) fasse saillie sur ledit au moins trou de passage (21), et que l'extrémité de raccordement est pourvu desdites une ou plusieurs mortaises (27) pour recevoir lesdits un ou plusieurs tenons (25).

7. Bâti (5) selon l'une des revendications 2 à 6, **caractérisé en ce que** :
- lesdits un ou plusieurs éléments de fixation (25, 26, 27) comprennent également un élément de blocage (26) ; ou
- lesdits un ou plusieurs éléments de fixation (25, 26, 27) comprennent également un élément de blocage ou un écrou de blocage (26) doté d'un premier filetage et que lesdits un ou plusieurs tenons (25) sont pourvus d'un deuxième filetage communiquant avec le premier filetage.

8. Bâti (5) selon l'une des revendications 1 à 7, **caractérisé en ce que** :
- lesdits un ou plusieurs éléments de serrage (22, 24) sont prévus en liaison avec lesdits un ou plusieurs éléments de fixation (25, 26, 27) et agencés de manière à serrer les parties de cadre (12, 13, 10, 11) l'une contre l'autre lors de la fixation des parties de cadre (12, 13, 10, 11) entre elles avec lesdits un ou plusieurs éléments de fixation (25, 26, 27).

9. Bâti (5) selon la revendication 8, **caractérisé en ce que** lesdits un ou plusieurs éléments de serrage (22, 24) comprennent
un trou de serrage (22), et que la partie de serrage (31) de la languette de serrage (24) est disposée dans le trou de serrage (22) de telle façon que, lors de la fixation et du blocage des parties de cadre (12, 13, 10, 11) entre elles avec lesdits un ou plusieurs éléments de fixation (25, 26, 27), la languette de serrage (24) serre les parties de cadre (12, 13, 10, 11) l'une contre l'autre ; ou
un trou de serrage (22), et que la partie de serrage (31) de la languette de serrage (24) est disposée dans le trou de serrage (22) de telle façon que, lors de la fixation et du blocage du tenon (25) sur la mortaise de l'ergot d'alignement (23) et le trou de serrage (22) de la languette de serrage (24) avec l'élément de blocage (26), la languette de serrage (24) serre les parties de cadre (12, 13, 10, 11) l'une contre l'autre.

10. Bâti (5) selon l'une des revendications 1 à 9, **caractérisé en ce que** :
- les parties de cadre (12, 13, 10, 11) sont des profilés métalliques rectilignes ; ou
- les parties de cadre (12, 13, 10, 11) sont des profilés métalliques rectilignes coupés au laser à la longueur désirée ; ou
- le bâti (5) comprend deux premières parties de cadre rectilignes (12, 13) et deux deuxièmes parties de cadre rectilignes (10, 11) attachées entre elles pour fournir un bâti rectangulaire (5) avec un canal de passage rectangulaire (15) ; ou
- le bâti (5) comprend deux premières parties de cadre rectilignes (12, 13) et deux deuxièmes parties de cadre rectilignes (10, 11) attachées entre elles pour fournir un bâti rectangulaire (5) avec un canal de passage rectangulaire (15), lesdits profilés métalliques rectilignes étant des profilés coupés au laser à la longueur désirée.

11. Bâti (5) selon l'une des revendications 1 à 10, **caractérisé en ce que** le bâti (5) comportant lesdites au moins deux parties de cadre (10, 11, 12, 13) mécaniquement attachées entre elles avec au moins un joint mécanique (20) est zingué à chaud ou galvanisé à chaud au trempé.

12. Clapet de surpression (1) pour protéger un système de ventilation d'un bâtiment contre les charges de pression, ledit clapet de surpression (1) comprenant :
- un bâti (5) selon l'une des revendications 1 à 11 agencé pour être monté sur un mur du bâtiment, ledit bâti (5) comprenant un cadre (10, 11, 12, 13) formant un canal de passage (15) à travers le bâti (5) et le mur du bâtiment ; et
- une soupape de pression (2) comprenant un corps formant un canal de passage pour un courant d'air à travers la soupape de pression (2), ladite soupape de pression étant agencée pour fermer le canal de passage en réaction à une augmentation de surpression soudaine, ladite soupape de pression (2) étant agencée pour être montée au bâti (5),
ledit cadre comprenant au moins deux parties de cadre (10, 11) mécaniquement attachées entre elles avec au moins un joint mécanique (20) pour fournir le cadre (10, 11, 12, 13), **caractérisé en ce que** le joint mécanique (20) comprend également un ou plusieurs éléments de serrage (22, 24) pour serrer les parties de cadre (12, 13, 10, 11) l'une contre l'autre ; et que lesdits un ou plusieurs éléments de serrage (22, 24) comprennent une languette de serrage (24) comportant une partie de raccordement (30) présentant une ou plusieurs mortaises de serrage (32) pour recevoir lesdits un ou plusieurs tenons (25), et une partie de serrage (31) s'étendant à un angle oblique par rapport à la partie de raccordement (30).

13. Clapet de surpression (1) selon la revendication 12, **caractérisé en ce que** le clapet de surpression (1) comprend :
- lesdits un ou plusieurs éléments de fixation (25, 26, 27) pour fixer les parties de cadre (12, 13, 10, 11) entre elles.

14. Clapet de surpression (1) selon la revendication 12 ou 13, **caractérisé en ce que** le clapet de surpression (1) comprend également un ou plusieurs éléments d'alignement (21, 23) pour aligner des parties de cadre (12, 13, 10, 11) les unes par rapport aux autres.

15. Clapet de surpression (1) selon l'une des revendications 12 à 14, **caractérisé en ce que** le clapet de surpression (1) comprend au moins l'un de ce qui suit :
- un dessableur (3) pour extraire le sable du flux d'air avant l'arrivée à la soupape de pression (2) ;
- une barrière anti-tempête (4) pour empêcher des objets solides dans le courant d'air de pénétrer à l'intérieur de la soupape de pression (2) ;
- une soupape étanche au gaz (6) pour régler le débit d'air provenant de la soupape de pression (2) ; et
- un clapet coupe-feu (7).

16. Procédé de préparation d'un bâti (5) pour un clapet de surpression (1) et sur ce cadre (10, 11, 12, 13) des composants agencés du clapet de surpression (1) sont à installer et appuyer, ledit bâti (5) comportant un cadre (10, 11, 12, 13) formant une périphérie du bâti (5) et un canal de passage (15) à travers le bâti (5), ledit canal de passage (15) étant défini par le cadre (10, 11, 12, 13),
**caractérisé en ce que** le procédé comprend les étapes consistant à :
- fournir au moins deux parties de cadre (10, 11, 12, 13) ayant des éléments (21, 22, 23, 24, 25, 26, 27) pour former un joint mécanique (20) entre lesdites au moins deux parties de cadre (10, 11, 12, 13) de telle façon que lesdites au moins deux parties de cadre (10, 11, 12, 13) soient alignées entre elles, fixées les unes aux autres et serrées les unes contre les autres ;
- assembler le bâti (5) et fixer les parties de cadre (10, 11, 12, 13) entre elles avec un joint mécanique (20) ;
- serrer les parties de cadre les unes contre les autres avec un ou plusieurs éléments de serrage (22, 24) qui comprennent une languette de serrage (24) comportant une partie de raccordement (30) présentant une ou plusieurs mortaises de serrage (32) pour recevoir lesdits un ou plusieurs tenons (25), et une partie de serrage (31) s'étendant à un angle oblique par rapport à la partie de raccordement (30), ce qui est prévu en liaison avec lesdits un ou plusieurs éléments de fixation (25, 26, 27) pendant la fixation des parties de cadre (12, 13, 10, 11) de telle façon qu'une tension soit établie entre les parties de cadre (10, 11, 12, 13).

17. Procédé selon la revendication 16, **caractérisé par** les étapes consistant à:
- assembler le bâti (5) en installant les parties de cadre (10, 11, 12, 13) ensemble et alignant les parties de cadre (10, 11, 12, 13) les unes par rapport aux autres avec des éléments d'alignement (21, 23) du joint mécanique (20) ;
- fixer les parties de cadre assemblées (10, 11, 12, 13) les unes aux autres avec des éléments de fixation (25, 27) du joint mécanique (20).

18. Procédé selon la revendication 16 ou 17, **caractérisé en ce que** l'assemblage du bâti (5) comprend l'étape consistant à aligner les parties de cadre (10, 11, 12, 13) les unes par rapport aux autres en positionnant un ou plusieurs ergots d'alignement (23) prévus à une première partie de cadre (12, 13) dans un ou plusieurs trous d'alignement (21) prévus à une deuxième partie de cadre (10, 11).

19. Procédé selon la revendication 17 ou 18, **caractérisé en ce que** :
- la fixation des parties de cadre assemblées (10, 11, 12, 13) comprend le blocage des éléments de fixation (25, 27) avec un élément de blocage ou un écrou de blocage (26) ; ou
- la fixation des parties de cadre assemblées (10, 11, 12, 13) comprend le positionnement d'un ou plusieurs tenons (25) dans une ou plusieurs mortaises (27) prévues auxdits un ou plusieurs ergots d'alignement (23) pour fixer les parties de cadre (12, 13, 10, 11) entre elles ; ou
- la fixation des parties de cadre assemblées (10, 11, 12, 13) comprend le positionnement d'un ou plusieurs tenons (25) dans une ou plusieurs mortaises (27) prévues auxdits un ou plusieurs ergots d'alignement (23) pour fixer les parties de cadre (12, 13, 10, 11) entre elles, et le blocage des éléments de fixation (25, 27) avec un élément de blocage ou un écrou de blocage (26).

20. Procédé selon l'une des revendications 16 à 19, **caractérisé en ce que** le procédé comprend également le zingage à chaud ou la galvanisation à chaud au trempé du bâti (5) assemblé, fixé et serré.
